(19) Europäisches Patentamt
European Patent Office
Office européen des brevets

(11) Veröffentlichungsnummer: **0 169 816 B1**

(12) **EUROPÄISCHE PATENTSCHRIFT**

(45) Veröffentlichungstag der Patentschrift: **17.06.92**

(51) Int. Cl.5: **C09B 67/26**, C09B 67/44, D06P 1/39, D06P 3/32

(21) Anmeldenummer: **85810337.7**

(22) Anmeldetag: **22.07.85**

(54) **Lösungen anionischer Farbstoffe.**

(30) Priorität: **26.07.84 CH 3622/84**

(43) Veröffentlichungstag der Anmeldung:
**29.01.86 Patentblatt 86/05**

(45) Bekanntmachung des Hinweises auf die Patenterteilung:
**17.06.92 Patentblatt 92/25**

(84) Benannte Vertragsstaaten:
**BE CH DE FR GB IT LI**

(56) Entgegenhaltungen:
**EP-A- 0 026 886**
**DE-A- 2 633 154**
**FR-A- 1 551 772**
**FR-A- 2 017 873**

(73) Patentinhaber: **CIBA-GEIGY AG**
**Klybeckstrasse 141**
**CH-4002 Basel(CH)**

(72) Erfinder: **Koci, Zdenek**
**Rebgasse 39**
**CH-4102 Binningen(CH)**

**EP 0 169 816 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Lösungen anionischer Farbstoffe zum Spritzfärben, ein Verfahren zu deren Herstellung, wie deren Verwendung zum Färben von Leder, Holz, Papier und Textilmaterialien.

Flüssige Farbstoffpräparate, Lösungen oder Dispersionen, weisen gegenüber den Pulverformen eine Reihe von Vorteilen auf, z.B. keine Staubentwicklung beim Ansetzen von Klotz- und Färbeflotten oder auch Druckpasten, keine Benetzungsprobleme durch Klumpenbildung, keine fleckigen Färbungen durch ungenügend gelöste oder nicht genügend feinverteilte Farbstoffteilchen.

Die Haltbarkeit von Flüssigpräparaten ist jedoch bei der Lagerung über längere Zeiträume oft nur unbefriedigend verglichen mit entsprechend formulierten Farbstoffpulvern oder Granulaten. So kommt es nicht selten zu Rekristallisationserscheinungen, d.h. zur Bildung von Agglomeraten oder gar eines festen Bodensatzes. Ungelöste Farbstoffpartikel ergeben jedoch nicht nur fleckige Färbungen, sondern machen sich insbesondere dann störend bemerkbar, wenn die entsprechenden Präparate durch Versprühen auf das jeweilige Substrat aufgebracht werden sollen. Hier verursachen selbst kleinere Farbstoffpartikel oftmals ein Verstopfen der Düse. Es sind daher in der Vergangenheit eine ganze Reihe von Flüssigformulierungen entwickelt worden, die den Farbstoff in echt gelöster Form enthalten und bei denen man durch Wahl geeigneter Lösungsmittel und Zusätze eine weitgehend befriedigende Lagerfähigkeit erreichen konnte; als Beispiel sind die in der DE-OS 28 02 326 beschriebenen Flüssigpräparate genannt. Derartige Flüssigformulierungen enthalten vielfach organische Lösungsmittel, wie z.B. Dimethylformamid oder Cellosolve-Lösungsmittel, die aus betriebshygienischen Gründen eher unerwünscht sind. Hinzukommt, dass bei der Spritzfärbung, insbesondere der Spritzfärbung von Leder im wesentlichen eher leichtflüchtige Lösungsmittel verwendet werden sollten, um möglichst kurze Trocknungszeiten zu erreichen. Die in der EP 0 041 239 angegebenen Farbstoffzubereitungen enthalten beispielsweise nichtionische hydrotrop wirkende Verbindungen, die aufgrund ihrer geringen Flüchtigkeit die Trocknungsgeschwindigkeit z.T. ungünstig beeinflussen.

Ferner sind aus der FR-A- 2017873 Anthradinonfarbstoff-lösungen bekannt welche $C_3$-$C_{12}$ Glykolether enthalten.

Aufgabe der vorliegenden Erfindung war es somit Lösungen von anionischen Farbstoffen zu entwickeln, die lagerstabil sind, d.h. über mehrere Monate im Bereich von +40 °C bis -10 °C problemlos aufbewahrt werden können und zum anderen hinreichend flüchtige Lösungsmittel enthalten, um so in der Sprühapplikation ohne Schwierigkeiten eingesetzt werden zu können. Zu fordern war ferner, dass die neuen Farbstofflösungen je nach Verwendung leicht in wässrigen, wässrig/organisch oder auch rein organischen Applikationslösungen löslich sind.

Gefunden wurde, dass eine kleine Klasse von Lösungsmitteln überraschenderweise diesen Anforderungen genügt und zwar sind dies die $C_1$ bis $C_4$ Monoalkyläther des Propylenglykols und des Butylenglykols und deren $C_1$ bis $C_4$ Carbonsäureester.

Gegenstand vorliegender Erfindung sind somit stabile, konzentrierte wässrig/organische oder rein organische Lösungen von anionischen Farbstoffen zum Spritzfärben, die den Farbstoff oder auch ein Gemisch anionischer Farbstoffe gelöst in einem $C_1$ bis $C_4$ Monoalkyläther des Propylenglykols, des Butylenglykols oder deren $C_1$ bis $C_4$ Carbonsäureester oder gelöst in Mischungen dieser Lösungsmittel enthalten, wobei diese Lösungen gegebenenfalls noch weitere Zusätze enthalten können.

Als anionische Farbstoffe kommen im vorliegenden z.B. Direkt-, Säure-, Chromierungs-, Entwicklungs-, Beizen- und vor allem Metallkomplex-Farbstoffe in Betracht, wie sie z.B. in Colour Index Bd. III zu finden sind. Es handelt sich z.B. um sulfonsäure- bzw. carbonsäuregruppenhaltigeFormazan-, Anthrachinon-, Azo-, Nitro-, Methin-, Triphenylmethan-, Xanthon-, Naphthazarin-, Chinophthalon- und Phthalocyaninfarbstoffe, insbesondere jedoch um gegebenenfalls sulfonsäure- bzw. carbonsäuregruppenhaltige Metallkomplexfarbstoffe. Dabei versteht es sich von selbst, dass Metallkomplexfarbstoffe auch ohne saure Gruppen im Molekül anionischen Charakter haben können, in Abhängigkeit von der Wertigkeit des zentralen Metallatoms und der Ladung der Liganden.

Als Metallkomplexfarbstoffe kommen beispielsweise 1:1- oder 1:2-Metallkomplexe von Azo- oder Azomethinfarbstoffen oder metallisierte Phthalocyanine, insbesondere Kupfer- und Nickelphthalocyanine, in Betracht. Bei den 1:1- und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o'-hydroxy-, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Typs, wobei diese Gruppierungen unsubstituiert oder auch substituiert sein können. Als Substituenten kommen z.B. in Betracht: gegebenenfalls substituiertes Sulfamoyl oder Sulfonyl, Halogen oder die Nitrogruppe, ferner die Sulfo- oder Carboxylgruppe.

Die erfindungsgemäss verwendeten Kupfer- und Nickelphthalocyanine leiten sich von den üblichen Gemischen verschiedener Sulfonierungsgrade ab und enthalten beispielsweise 2 bis 3 oder auch 4 sulfatierte $\beta$- oder $\gamma$-N-Hydroxyalkylsulfamoylgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch Alkylgruppen, wie Methyl, Aethyl, Propyl, oder niedere Hydroxyalkylgruppen, wie 2-Hydroxyäthyl, 2-Hydroxypropyl oder 3-Hydroxypropyl.

In den erfindungsgemässen flüssigen Zubereitungen verwendet man die anionischen Farbstoffe vorzugsweise in Form ihrer Metallsalze, wie sie bei der Synthese anfallen, z.B. der Lithium-, Kalium-, Magnesium-, oder vor allem Natriumsalze. Sie können aber auch in Form ihrer Alkanolamin- und Aminsalze verwendet werden.

Die Farbstoffe können gegebenenfalls auch in Mischungen miteinander oder gegebenenfalls mit Farbstoffen von einem anderen Typ vorliegen.

Die erfindungsgemäss verwendbaren Farbstoffe sind bekannt und können nach bekannten Methoden hergestellt werden.

Sie können gewöhnlicherweise entweder als getrocknete salzhaltige Farbstoff-Presskuchen oder als teil- oder fast vollständig entsalzte Farbstoffe nach verschiedenen bekannten Entsalzungsmethoden, einschliesslich Membrantrennverfahren z.B. gemäss EP 41'240 verwendet werden.

Bei den in den Flüssigformulierungen enthaltenen spezifischen Lösungsmitteln oder Lösungsmittelgemischen, den Propylenglykol- oder Butylenglykol-monoalkyl-($C_1$-$C_4$)-äthern bzw. deren $C_1$ bis $C_4$ Carbonsäureestern handelt es sich im einzelnen beispielsweise um die folgenden Verbindungen: 1-Methoxy-2-propanol, 2-Methoxy-1-propanol, 1-Aethoxy-2-propanol, 2-Aethoxy-1-propanol, 1-Propoxy-2-propanol, 2-Propoxy-1-propanol, 1-n-Butoxy-2-propanol, 2-n-Butoxy-1-propanol, 1-iso-Butoxy-2-propanol, 2-iso-Butoxy-1-propanol, 2-Methoxy-1-butanol, 3-Methoxy-1-butanol, 1-Methoxy-2-butanol, 3-Methoxy-2-butanol, 2-Aethoxy-1-butanol, 3-Aethoxy-1-butanol, 4-Aethoxy-1-butanol, 3-Aethoxy-2-butanol, 2-Propoxy-1-butanol, 3-Propoxy-1-butanol, 4-Propoxy-1-butanol, 3-Propoxy-2-butanol, 3-n-Butoxy-1-butanol, 3-isoButoxy-1-butanol.Diese Monoalkyläther des Propylen- und Butylenglykols sind aufgrund ihrer Flüchtigkeit vorallem für Spritzlösungen, insbesondere für das Spritzfärben von Leder geeignet. Bevorzugt sind die Monomethyl- oder Monoäthyläther des Propylen- bzw. Butylenglykols insbesondere die folgenden: 1-Methoxy-2-propanol, 1-Aethoxy-2-propanol, 2-Methoxy-1-propanol, 3-Methoxy-1-butanol, sowie 2-Methoxy-1-butanol. Vor allem die Methoxypropanole zeichnen sich durch eine grosse Anwendungsbreite aus.

Gute Ergebnisse werden ferner mit den $C_1$ bis $C_4$, insbesondere den $C_1$ und $C_2$ Carbonsäureestern der genannten Monoalkyläther des Propylen- bzw. Butylenglykols erhalten. Genannt sind beispielsweise 1-Methoxy-2-propylpropionat, 1-Aethoxy-2-propylacetat, 2-Methoxy-1-butylacetat, 3-Methoxy-1-butylacetat und insbesondere das 1-Methoxy-2-propylacetat bzw. das 2-Methoxy-1-propylacetat.

Neben den reinen Lösungsmitteln kommen auch Lösungsmittelgemische in Frage, vor allem Mischungen aus 1-Aethoxy-2-propanol und 3-Methoxy-1-butanol, aus 1-Methoxy-2-propanol und 3-Methoxy-1-butanol, aus 1-Methoxy-2-propanol, 2-Methoxy-1-propanol und 2-Methoxy-1-butanol ferner aus 1-Methoxy-2-propanol und 1-Methoxy-2-propylacetat bzw. 2-Methoxy-1-propylacetat.

Die erfindungsgemässen Farbstofflösungen enthalten vorteilhaft 10 bis 40 Gew.% anionischen Farbstoff und 40 bis 90 Gew.% eines oder mehrerer der vorstehend genannten Lösungsmittel.

Je nach Farbstoff erweist es sich als zweckmässig zur weiteren Verbesserung der Lagerstabilität neben den genannten Lösungsmitteln noch bis zu 30 Gew.% bezogen auf die Gesamtformulierung, eines Frostschutzmittels, wie eines $C_2$ bis $C_4$-Glykols, insbesondere Aethylenglykol, Propylenglykol, Butylenglykol oder Diäthylenglykol zuzusetzen.

Als weitere Zusätze kommen ferner Löslichkeitsverbesserer wie alicyclische Alkohole, insbesondere der Tetrahydrofurfurylalkohol und Ketonalkohole, vor allem der Diacetonalkohol in Betracht. Diese werden in einer Menge bis zu 9 Gew.%, bezogen auf die Gesamtformulierung verwendet. Verwendet werden zweckmässiger Weise solche alicyclische Alkohole und Diacetonalkohole mit einem Siedepunkt zwischen 120 und 170 °C.

Insbesondere im Hinblick auf die Sprühapplikation können in Abhängigkeit von den Eigenschaften des zu färbenden Materials Benetzungsprobleme und Schwierigkeiten hinsichtlich der Egalität der Färbung auftreten. Hier erweist sich unerwartet der Zusatz eines anionischen oder nichtionischen Tensids als äusserst wirksam. D.h. durch oberflächenaktive Mittel lassen sich hier überraschenderweise die Anwendungseigenschaften der Farbstofflösungen eindeutig verbessern. Bei der Sprühapplikation der erfindungsgemässen Präparate auf Leder werden vor allem, mit den folgenden Tensiden ausgezeichnete Ergebnisse erhalten:

Nichtionische oder anionische Fluortenside: es handelt sich hier in erster Linie um Tenside, die als hydrophoben Teil eine Perfluoralkylgruppe, insbesondere eine verzweigte oder unverzweigte $C_4$ bis $C_{12}$ Perfluoralkylgruppe und als hydrophilen Teil wasserlöslichmachende Gruppen, wie z.B. Sulfogruppen oder

auch nichtionische Gruppen, wie z.B. einen Polyalkylenoxidrest enthalten; genannt sind hier beispielsweise die N-Perfluoralkyl-N-methyl-polyalkylenoxid-carbamidsäureester. Derartige Tenside sind z.B. in Seifen, Oele, Fette, Wachse 15 (1978) Seiten 429-432 beschrieben. Gute Ergebnisse werden u.a. auch mit der Perfluoroctansulfonsäure erzielt, die als freie Säure oder als Alkalimetallsalz bzw. Ammoniumsalz oder Tetraalkylammoniumsalz verwendet wird.

Langkettige Acetylen-Glykole: diese Verbindungen gehören zur Gruppe der nichtionischen Tenside, bevorzugt sind solche mit 8 bis 20 Kohlenstoffatomen im Molekül, und hier insbesondere die symmetrisch gebauten Typen mit mittelständig angeordneter Dreifachbindung. Acetylenglykole ergeben nicht nur gut netzende Farbstofflösungen, sondern erniedrigen darüberhinaus die Viskosität der Sprühlösung. In Betracht kommen beispielsweise die folgenden Verbindungen 4-Octin-3,6-diol, 2,7-Dimethyl-4-octin-3,6-diol, 3,6-Dimethyl-4-octin-3,6-diol, 5-Decin-4,7-diol, 2,9-Dimethyl-5-decin-4,7-diol, 4,7-Dimethyl-5-decin-4,7-diol, 2,4,7,9-Tetramethyl-5-decin-4,7-diol oder 2,5,8,11-Tetramethyl-6-dodecin-5,8-diol. Bevorzugt sind die verzweigten Acetylen-Glykole, insbesondere das 2,4,7,9-Tetramethyl-5-decin-4,7-diol und das 3,6-Dimethyl-4-octin-3,6-diol. Bekannt ist bislang die Verwendung derartiger Verbindungen als Entschäumer für wässrige Lösungen. Silikontenside: gemeint sind hier in erster Linie Silikontenside auf Basis von Alkylsiloxan-Alkylenoxid-Copolymerisaten. Derartige Tenside gehören ebenfalls zur Gruppe der nichtionischen Tenside; der hydrophobe Teil dieser Tenside ist ein Polysiloxanrest, üblicherweise ein Dimethylpolysiloxan und der hydrophile Teil eine Aethylenoxid- oder Aethylenoxid/Propylenoxid-Kette. Beschrieben sind solche Tenside beispielsweise in ADR, Mai 1982, Seiten 45-50.

Die aufgeführten nichtionischen und anionischen Tenside wirken insbesondere auf Leder als ausgezeichnete Penetrationsbeschleuniger, sie haben eine gute Netz- und Egalisierwirkung ohne dabei in irgendeiner Weise die Lagerstabilität der Präparate ungünstig zu beeinflussen. Die Tenside sind bereits in geringer Konzentration wirksam; 0,2-2 Gew.%, bezogen auf die fertige Formulierung sind vielfach völlig ausreichend. Neben Tensiden oder Tensidmischungen einer Klasse (Oligomerengemische) können auch Tenside aus verschiedenen Klassen miteinander kombiniert werden.

Die erfindungsgemässen Farbstofflösungen haben bevorzugt die folgende Zusammensetzung:

| | |
|---|---|
| 10 bis 40 Gew.% | anionischer Farbstoff, insbesondere ein Metallkomplexfarbstoff oder ein Gemisch derartiger Farbstoffe; |
| 40 bis 80 Gew.% | $C_1$ bis $C_4$ Monoalkyläther des Propylenglykols, des Butylenglykols oder deren $C_1$ bis $C_4$ Carbonsäureester oder Mischungen derselben; |

und gegebenenfalls eine oder mehrere der folgenden Komponenten:
2 bis 30 Gew.% eines oder mehrerer $C_2$ bis $C_4$ Glykole;
2 bis 9 Gew.% Tetrahydrofurfurylalkohol oder Diacetonalkohol;
0,1 bis 2 Gew.% anionisches und/oder nichtionisches Tensid.

Neben diesen rein organischen Farbstofflösungen sind auch organisch/wässrige Farbstofflösungen Gegenstand der vorliegenden Erfindung. Diese haben vorteilhaft die vorstehend angegebene Zusammensetzung und enthalten als weitere Komponente bis zu 40 Gew.% Wasser.

Zur Herstellung der erfindungsgemässen Farbstofflösungen wird zunächst der anionische Farbstoff oder das Farbstoffgemisch in dem Propylenglykol- oder Butylenglykol-($C_1$-$C_4$)-monoalkyläther oder dessen ($C_1$-$C_4$)-Carbonsäureester oder in Mischungen dieser Lösungsmittel bei 10° bis 70°C gelöst. Nach Abkühlen der Lösung werden eventuell ausgefallene oder unlösliche Anteile abgetrennt, z.B. durch Filtration, Ultrazentrifugieren oder einfach durch Abdekantieren. Anschliessend wird die Lösung gegebenenfalls noch mit den vorstehend im einzelnen aufgeführten Zusätzen versehen und durch weiteren Zusatz von Propylenglykol- bzw. Butylenglykolmonoalkyläther bzw. deren Estern und/oder Wasser auf die gewünschte Farbstärke eingestellt. Da der Farbstoff zu Beginn nur im organischen Lösungsmittel gelöst wird, lassen sich darin unlösliche Anteile vor allem anorganische Salze, durch die der Farbstoff von der Synthese her verunreinigt ist, leicht und nahezu vollständig abtrennen. Das ist besonders wichtig im Hinblick auf die Lagerfähigkeit der fertigen Farbstofflösung. In salzhaltigen Farbstofflösungen neigt der Farbstoff wesentlich stärker zur Rekristallisation und Agglomeration, als in salzarmen oder salzfreien Lösungen. Natürlich kann der Farbstoff nicht nur in Form des salzhaltigen Rohfarbstoffs, getrocknet oder als wasserfeuchter Presskuchen, sondern auch als reines Farbstoffpulver oder als wässrige Farbstofflösung eingesetzt werden. Geht man von der wässrigen Farbstofflösung aus, so ist es zweckmässig diese zuvor mittels eines Membrantrennverfahrens beispielsweise der Ultra- oder Hyperfiltration zu entsalzen.

Die erfindungsgemässen Farbstofflösungen sind dünnflüssig, konzentriert und lagerstabil und lassen sich problemlos in organische, wässrig/organische oder rein wässrige Applikationslösungen einarbeiten. Sie eignen sich zur Herstellung von Spritzlösungen. Je nach Farbstoff eignen sich die vorliegend beschriebenen Lösungen zum Färben der verschiedensten Substrate, wie z.B. Textilmaterialien, Holz, Papier, insbesondere jedoch zur Spritzfärbung von Leder.

Die folgenden Beispiele veranschaulichen die Erfindung; Teile bedeuten Gewichtsteile und Prozente Gewichtsprozente.

Beispiel 1: 31 Teile des Farbstoffes der Formel

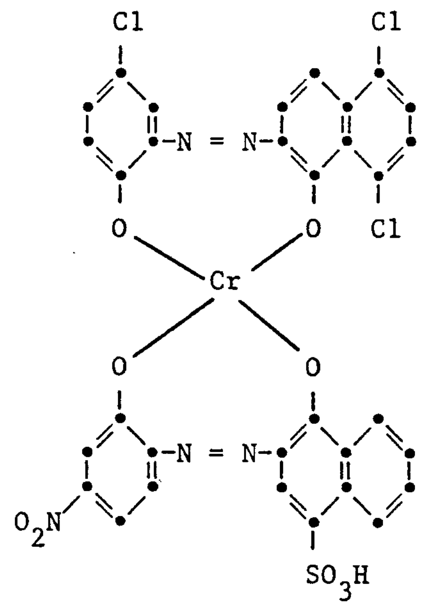

werden unter Rühren bei +50°C innerhalb von 5 Minuten in das folgende Lösungsmittel/Tensidgemisch eingetragen:

47,5 Teile 1-Methoxy-2-propanol
20,0 Teile Diaethylenglykol und
1,5 Teile 50%-ige Aethylenglykollösung von 2,4,7,9-tetramethyl-5-decyn-4,7-diol.

Der Farbstoff wird als kochsalzhaltiger Rohfarbstoff eingesetzt. Nach 2-stündigem Rühren bei 50°C wird noch weitere 2 Stunden bei Raumtemperatur gerührt.

Zur Entfernung von ungelösten Anteilen (Verunreinigungen) wird die Lösung in einer Laborultrazentrifuge 20 Min. bei 4'000 Upm behandelt und die von ungelösten Anteilen befreite Lösung zusätzlich durch ein 5 μm-Nylon-Filter filtriert.

Man erhält 95 Teile (95% Ausbeute) einer dünnflüssigen, homogenen lagerstabilen Farbstoffzubereitung, die nach 3 Monaten der Lagerung bei +40°C und bei -10°C stabil ist, d.h. keine Ausfällung (Kristallisation) des Farbstoffes zeigt.

Appliziert als Spritzlösung: Es wird eine Spritzlösung angesetzt, die aus 10% der vorstehend beschriebenen flüssigen Farbstoffzubereitung, 10% 1-Methoxy-2-propanol und 80% Wasser besteht. Diese ergibt auf ein mit Chromsalzen gegerbtes Leder gesprüht eine rasche Benetzung mit sehr guter Egalität. Nach der Trocknung erhält man ein, in einem kräftigen dunkelblauen Ton gleichmässig gefärbtes Ledermuster.

Beispiel 2: Gemäss dem Verfahren nach Beispiel 1 stellt man eine flüssige Farbstoffzubereitung der folgenden Zusammensetzung her: 22,5 Teile des Farbstoffes der Formel

1:2 Co-Komplex

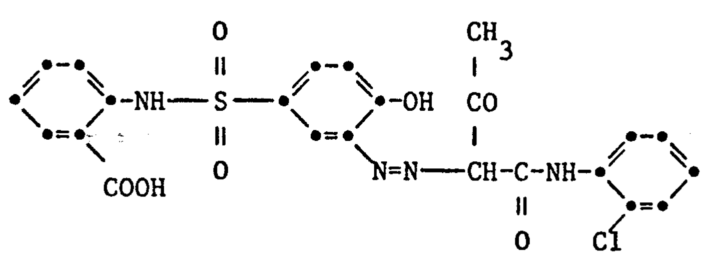

70 Teile 1-Aethoxy-2-propanol
7,5 Teile 3-Methoxy-1-butanol.

Die Farbstoffzubereitung ist nach 3 Monaten Lagerung bei +40 °C und bei -10 °C stabil; in der Applikation auf Leder gemäss Beispiel 1 erhält man ebenfalls eine egale Färbung.

Beispiel 3: Gemäss dem Verfahren nach Beispiel 1 stellt man eine flüssige Farbstoffzubereitung der folgenden Zusammensetzung her: 30 Teile des Farbstoffes (Farbstoffmischung) der Formel

1:1 Cr-Komplex der Einzelfarbstoffe

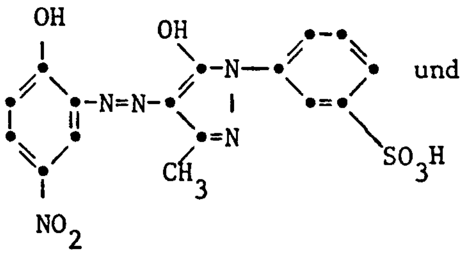

und

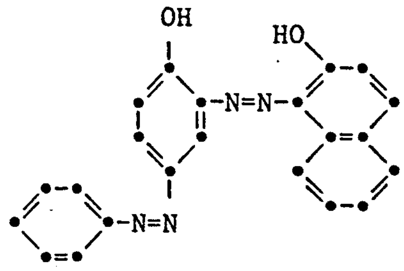

45 Teile 1-Methoxy-2-propanol
20 Teile 3-Methoxy-1-butanol
5 Teile Tetrahydrofurfurylalkohol.

Die Farbstoffzubereitung ist nach 3 Monaten Lagerung bei +40 °C und bei -10 °C stabil. Die Applikation auf Leder gemäss Beispiel 1 ergibt ebenfalls eine einwandfreie egale Färbung.

Beispiel 4: Gemäss dem Verfahren nach Beispiel 1 stellt man eine flüssige Farbstoffzubereitung der folgenden Zusammensetzung her:
25 Teile des Farbstoffes der Formel

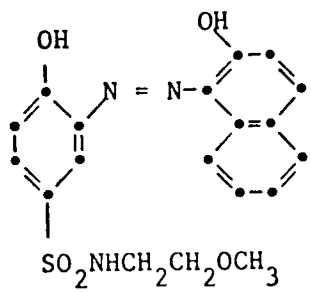

1:2 Co-Komplex

54 Teile einer Mischung von ca. 90% 1-Methoxy-2-propanol und ca. 10% 2-Methoxy-1-propanol
20 Teile 2-Methoxy-1-butanol
1 Teil Methylsiloxan-Aethylenoxid-Copolymer mit 88 Gew.% Aethylenoxid und einem HLB-Wert von 17,6.

Die flüssige Farbstoffzubereitung ist nach 3 Monaten Lagerung bei +40 °C und bei -10 °C stabil; in der Applikation auf Leder gemäss Beispiel 1 erfolgt eine rasche Benetzung und egale Färbung.

Eine gleich gute Lagerstabilität, bei rascher Benetzung und egaler Färbung des Leders erreicht man, wenn man die gleichen Mengen des Tetraaethylammonium-Salzes der Perfluor-Oktansulfonsäure anstelle des copolymeren Siloxan-Tensids verwendet.

Beispiel 5: 23 Teile des Farbstoffes der Formel

1:2-Chromkomplex

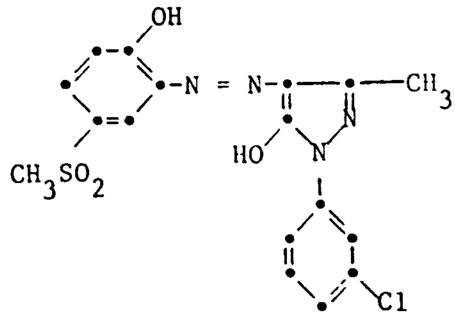

werden unter Rühren bei 50 ° C innerhalb von 5 Minuten in 72 Teile 1-Aethoxy-2-propanol eingetragen.

Nach dem 2-stündigen Rühren bei 50 ° C wird noch weitere 2 Stunden bei Raumtemperatur gerührt.

Die Lösung wird dann in einer Laborzentrifuge (20 Minuten bei 4'000 Upm) behandelt und die von ungelösten Anteilen befreite Lösung noch durch ein 5 µm Nylon-Filter filtriert.Zur Farbstoff-Lösung werden dann noch 5 Teile Wasser zugesetzt.

Man erhält 90 Teile (90% Ausbeute) einer dünnflüssigen Farbstofflösung, die während 3 Monaten bei +40 ° C und -10 ° C stabil ist und in der Applikation auf Leder gemäss Beispiel 1 egale Färbungen ergibt.

Beispiel 6: Gemäss dem Verfahren nach Beispiel 1 stellt man eine flüssige Farbstoffzubereitung der folgenden Zusammensetzung her: 22 Teile des Farbstoffes der Formel

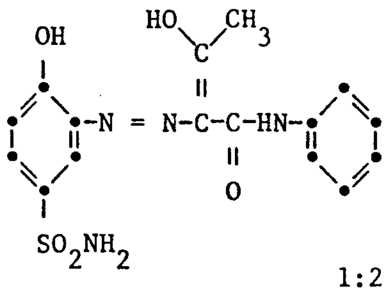

1:2 Co-Komplex

53 Teile 1-Methoxy-2-propanol
20 Teile Methoxy-propylacetat
5 Teile Propylenglykol

Die flüssige Farbstoffzubereitung ist während einer 3-monatigen Lagerung bei +40 ° C und bei -10 ° C stabil; in der Applikation auf Leder gemäss Beispiel 1 erhält man eine einwandfrei egale Färbung.

Eine Farbstofformulierung mit vergleichbar guter Lagerstabilität und entsprechenden anwendungstechnischen Eigenschaften, erhält man, wenn man anstelle des Methoxy-propylacetats die gleiche Menge an 1-Aethoxy-2-propylacetat, 1-Methoxy-2-propylpropionat oder 2-Methoxy-1-butylacetat verwendet.

Beispiel 7: Gemäss dem Verfahren nach Beispiel 1 stellt man eine flüssige Farbstoffzubereitung der folgenden Zusammensetzung her:

28 Teile des Farbstoffes der Formel

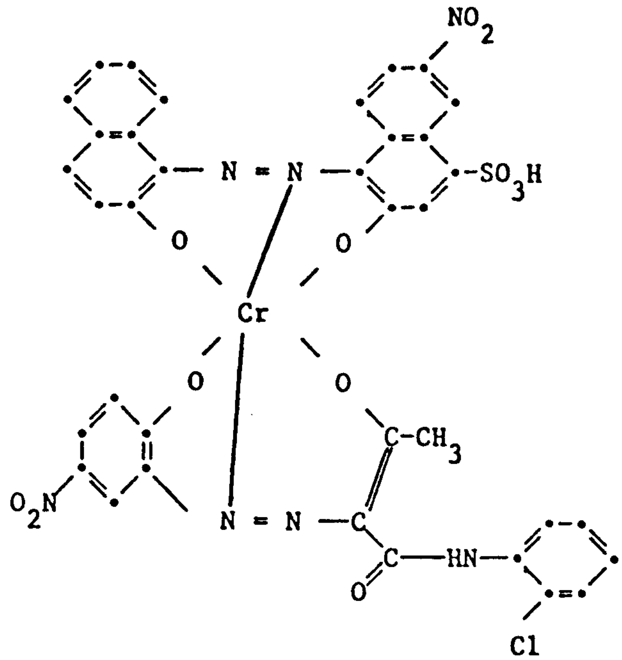

67 Teile 1-iso-Propoxy-2-propanol
5 Teile Tetrahydrofurfurylalkohol
Die flüssige Farbstoffzubereitung ist während einer 3-monatigen Lagerung bei 40 ° C und bei -10 ° C stabil, in der Applikation auf Leder gemäss Beispiel 1 erhält man eine einwandfrei egale Färbung.

Eine Farbstofformulierung die ebenfalls lagerstabil ist und sich zum Spritzfärben von Leder eignet, erhält man, wenn man anstelle des iso-Propoxypropanols die gleiche Menge an 1-iso-Butoxy-2-propanol verwendet.

Beispiel 8: 25 Teile des Farbstoffs der Formel

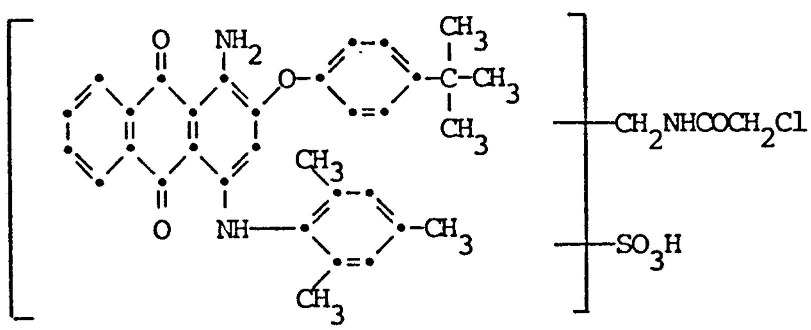

werden unter Rühren bei 55 ° C innerhalb von 5 Minuten in 60 Teile 1-Methoxy-2-propanol eingetragen. der Farbstoff wird als kochsalzhaltiger Rohfarbstoff eingesetzt. Anschliessend wird noch weitere 2 Stunden bei Raumtemperatur gerührt. Die Lösung wird dann in einer Laborzentrifuge (20 Min. bei 4'000 Upm) zentrifugiert, von ungelösten Anteilen befreit und noch durch einen 5 µm Nylon-Filter filtriert. Der gereinigten Farbstofflösung werden dann noch 15 Teile Wasser zugesetzt. Man erhält 90 Teile (90% Ausbeute) einer dünnflüssigen Farbstofflösung, die während 3 Monaten bei +40C und -10 ° C stabil ist und in der Applikation auf Leder gemäss Beispiel 1 egale Färbungen ergibt.

Verwendet man anstelle des 1-Methoxy-2-propanols die gleiche Menge an 2-Propoxy-1-butanol, so erhält man ebenfalls eine lagerstabile Flüssigformulierung.

Beispiel 9: Gemäss dem Verfahren nach Beispiel 1 stellt man eine flüssige Farbstoffzubereitung der folgenden Zusammensetzung her:
16 Teile einer salzarmen Farbstoffmischung aus den Einzelfarbstoffen der Formeln

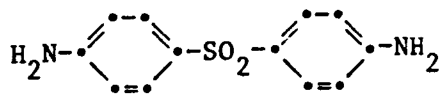

und

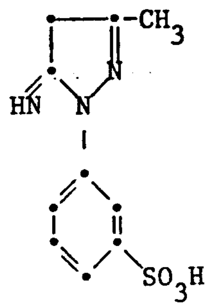

5 Teile Tetrahydrofurfurylalkohol
48 Teile 1-Aethoxy-2-propanol
30 Teile Wasser
Die flüssige Farbstoffzubereitung ist während einer 3-monatigen Lagerung bei +40°C und bei -10°C stabil. In der Applikation auf Leder gemäss Beispiel 1 erhält man eine einwandfrei egale Färbung.

Verwendet man anstelle des Aethoxypropanols die gleiche Menge an 3-Butoxy-1-butanol, so erhält man ebenfalls eine lagerstabile Flüssigformulierung.

Beispiel 10: 23,4 Teile des Farbstoffs der Formel

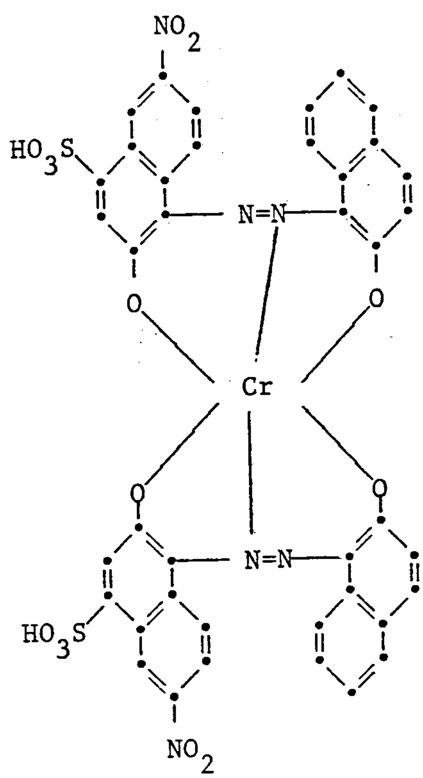

als Trinatriumsalz
sowie 2,5 Teile des Farbstoffes der in Beispiel 7 angegebenen Formel werden unter Rühren bei 55°C innerhalb von 10 Minuten in 59,1 Teile 1-Methoxy-2-propanol eingetragen.

Nach einstündigem Rühren bei 55°C und weiteren 2 Stunden Rühren bei Raumtemperatur wird die Lösung in einer Laborzentrifuge (20 Minuten bei 4'000 Upm) zentrifugiert, von ungelösten Anteilen befreit und durch einen 5 µm Nylon-Filter filtriert. Der gewonnenen Farbstofflösung werden dann noch 15 Teile Wasser zugesetzt. Man erhält 92 Teile (92% Ausbeute) einer dünnflüssigen Farbstofflösung, die während 3 Monaten bei +40°C und -10°C stabil ist.

**Patentansprüche**

1. Wässrig/organische oder rein organische Lösungen von anionischen Farbstoffen zum Spritzfärben, dadurch gekennzeichnet, dass diese einen oder mehrere anionische Farbstoffe gelöst in einen $C_1$ bis $C_4$ Monoalkyläther des Propylenglykols, des Butylenglykols oder deren $C_1$ bis $C_4$ Carbonsäureester oder in Mischungen derselben enthalten.

2. Farbstofflösungen gemäss Anspruch 1, dadurch gekennzeichnet, dass diese als Lösungsmittel einen Monomethyl- oder Monoäthyläther des Propylen- bzw. Butylenglykols enthalten.

3. Farbstofflösungen gemäss Anspruch 1, dadurch gekennzeichnet, dass diese als Lösungsmittel 1-Methoxy-2-propanol, 2-Methoxy-1-propanol,3-Methoxy-1-butanol, 2-Methoxy-1-butanol, 1-Aethoxy-2-propanol, 1-Methoxy-2-propylacetat, 2-Methoxy-1-propylacetat oder Lösungsmittelgemische aus 1-Aethoxy-2-propanol und 3-Methoxy-1-butanol, aus 1-Methoxy-2-propanol und 3-Methoxy-1-butanol, aus 1-Methoxy-2-propanol, 2-Methoxy-1-propanol und 2-Methoxy-1 -butanol, aus 1-Methoxy-2-propanol und 1-Methoxy-2-propylacetat oder aus 1-Methoxy-2-propanol und 2-Methoxy-1-propylacetat enthalten.

4. Farbstofflösungen gemäss Anspruch 1, dadurch gekennzeichnet, dass diese 10 bis 40 Gew.% anionischen Farbstoff und 40 bis 90 Gew.% Lösungsmittel enthalten.

5. Farbstofflösungen gemäss Anspruch 1, dadurch gekennzeichnet, dass diese als weitere Zusätze ein oder mehrere $C_2$ bis $C_4$ Glykole Tetrahydrofurfurylalkohol, Diacetonalkohol, anionische- und/oder nichtionische Tenside enthalten.

6. Farbstofflösungen gemäss Anspruch 5, dadurch gekennzeichnet, dass diese als anionisches oder nichtionisches Tensid eine Perfluoralkyl($C_4$-$C_{12}$)-sulfonsäure, symmetrische Acetylenglykole mit 8 bis 20 C-Atomen im Kohlenstoffgerüst und/oder Silikontenside auf Basis von Alkylsiloxan-Alkylenoxid-Copolymerisaten enthalten.

7. Farbstofflösungen gemäss Anspruch 1, dadurch gekennzeichnet, dass diese

| | |
|---|---|
| 10 bis 40 Gew.% | anionischen Farbstoff, insbesondere einen Metallkomplexfarbstoff oder ein Gemisch derartiger Farbstoffe; |
| 40 bis 80 Gew.% | $C_1$ bis $C_4$ Monoalkyläther des Propylenglykols, des Butylenglykols oder deren $C_1$ bis $C_4$ Carbonsäureester oder Mischungen derselben; und gegebenenfalls eine oder mehrere der folgenden Komponenten enthalten: |
| 2 bis 30 Gew.% | eines oder mehrerer $C_2$ bis $C_4$ Glykole; |
| 2 bis 9 Gew.% | Tetrahydrofurfurylalkohol oder Diacetonalkohol; |
| 0,1 bis 2 Gew.% | anionisches und/oder nichtionisches Tensid |
| bis zu 40 Gew.% | Wasser. |

8. Verfahren zur Herstellung der Farbstofflösungen gemäss Anspruch 1, dadurch gekennzeichnet, dass man den anionischen Farbstoff oder das Gemisch anionischer Farbstoffe in einem Propylenglykol- oder Butylenglykol($C_1$-$C_4$)-monoalkyläther oder dessen ($C_1$-$C_4$)-Carbonsäureester oder in Mischungen dieser Lösungsmittel bei einer Temperatur von 10° bis 70°C löst, die Lösung soweit notwendig bei Raumtemperatur von unlöslich Anteilen befreit, gegebenenfalls mit einem oder mehreren $C_1$ bis $C_4$ Glykolen, Tetrahydrofurfurylalkohol, Diacetonalkohol, anionischen und/oder nichtionischen Tensiden versetzt und durch weiteren Zusatz von Propylenglykol- bzw. Butylenglykol-monoalkyläther oder deren Ester und/oder Wasser auf die gewünschte Farbstärke einstellt.

9. Verwendung der Farbstofflösungen gemäss Anspruch 1 zur Herstellung von Spritzlösungen, zum Färben von Textilmaterial, Leder, Holz oder Papier, insbesondere zur Herstellung von Lösungen für das Spritzfärben von Leder.

## Claims

1. An aqueous-organic or purely organic solution of anionic dyes for spray dyeing, which contains one or more anionic dyes dissolved in a $C_1$-$C_4$ monoalkyl ether of propylene glycol or of butylene glycol or a $C_1$-$C_4$ carboxylic acid ester thereof or in a mixture of these solvents.

2. A dye solution according to claim 1 wherein the solvent is a monomethyl or monoethyl ether of propylene glycol or of butylene glycol.

3. A dye solution according to claim 1, wherein the solvent is 1-methoxy-2-propanol, 2-methoxy-1-propanol, 3-methoxy-1-butanol, 2-methoxy-1-butanol, 1-ethoxy-2-propanol, 1-methoxy-2-propyl acetate, 2-methoxy-1-propyl acetate or a solvent mixture of 1-ethoxy-2-propanol and 3-methoxy-1-butanol, of 1-methoxy-2-propanol and 3-methoxy-1-butanol, of 1-methoxy-2-propanol, 2-methoxy-1-propanol and 2-methoxy-1-butanol, of 1-methoxy-2-propanol and 1-methoxy-2-propyl acetate or of 1-methoxy-2-propanol and 2-methoxy-1-propyl acetate.

4. A dye solution according to claim 1, which contains 10 to 40 % by weight of anionic dye and 40 to 90 % by weight of solvent.

5. A dye solution according to claim 1, which contains as further assistants one or more $C_2$-$C_4$ glycols, tetrahydrofurfuryl alcohol, diacetone alcohol, anionic and/or nonionic surfactants.

6. A dye solution according to claim 5, wherein the anionic or nonionic surfactant is a perfluoro-$C_4$-$C_{12}$alkylsulfonic acid, a symmetrical acetylene glycol containing 8 to 20 carbon atoms in the carbon framework and/or a silicone surfactant based on an alkylsiloxane/alkylene oxide copolymer.

7. A dye solution according to claim 1, which comprises

| | |
|---|---|
| 10 to 40 % by | weight of anionic dye, in particular a metal complex dye or a mixture of such dyes, |
| 40 to 80 % by | weight of a $C_1$-$C_4$ monoalkyl ether of propylene glycol or of butylene glycol, or of a $C_1$-$C_4$ carboxylic acid ester thereof or of a mixture of these solvents; and, if desired, one or more of the following components: |
| 2 to 30 % by | weight of one or more $C_2$-$C_4$ glycols, |
| 2 to 9 % by | weight of tetrahydrofurfuryl alcohol or diacetone alcohol, |
| 0.1 to 2 % by | weight of an anionic and/or a nonionic surfactant, and up |
| to 40 % by | weight of water. |

8. A process for the preparation of a dye solution as claimed in claim 1, which comprises dissolving the anionic dye or the mixture of anionic dyes, in a $C_1$-$C_4$ monoalkyl ether of propylene glycol or of butylene glycol or a $C_1$-$C_4$ carboxylic acid ester thereof or in a mixture of these solvents at a temperature 10° to 70°C, if necessary freeing the solution from insoluble constituents at room temperature, optionally adding one or more $C_1$-$C_4$ glycols, tetrahydrofurfuryl alcohol, diacetone alcohol, an anionic and/or a nonionic surfactant, and adjusting the solution to the desired tinctorial strength by the further addition of a monoalkyl ether of propylene glycol or butylene glycol or an ester thereof and/or water.

9. The use of a dye solution as claimed in claim 1 for the preparation of spray solutions for dyeing textile material, leather, wood or paper, in particular for the preparation of solutions for spray dyeing leather.

**Revendications**

1. Solutions, aqueuses-organiques ou purement organiques, de colorants anioniques pour teinture par pulvérisage, caractérisées en ce qu'elles contiennent un ou plusieurs colorants anioniques, dissous dans un éther mono(alkylique en $C_1$-$C_4$) du propylèneglycol ou du butylèneglycol ou l'un de leurs esters d'acides carboxyliques en $C_1$-$C_4$, ou dans des mélanges de ses composés.

2. Solutions de colorants conformes à la revendication 1, caractérisées en ce qu'elles contiennent, en tant que solvant, un éther monométhylique ou mono-éthylique du propylèneglycol ou du butylèneglycol.

3. Solutions de colorants conformes à la revendication 1, caractérisées en ce qu'elles contiennent, comme solvant, du 1-méthoxy-2-propanol, du 2-méthoxy-1-propanol, du 3-méthoxy-1-butanol, du 2-méthoxy-1-butanol, du 1-éthoxy-2-propanol, de l'acétate de 1-méthoxy-2-propyle, de l'acétate de 2-méthoxy-1-propyle, ou des mélanges de solvants constitués de 1-éthoxy-2-propanol et de 3-méthoxy-1-butanol, de 1-méthoxy-2-propanol et de 3-méthoxy-1-butanol, de 1-méthoxy-2-propanol, de 2-méthoxy-1-propanol

et de 2-méthoxy-1-butanol, de 1-méthoxy-2-propanol et d'acétate de 1-méthoxy-2-propyle, ou de 1-méthoxy-2-propanol et d'acétate de 2-méthoxy-1-propyle.

**4.** Solutions de colorants conformes à la revendication 1, caractérisées en ce qu'elles contiennent de 10 à 40 % en poids de colorant anionique et de 40 à 90 % en poids de solvant.

**5.** Solutions de colorants conformes à la revendication 1, caractérisées en ce qu'elles contiennent, comme autres adjuvants, un ou plusieurs composés choisis parmi les glycols en $C_2$-$C_4$, l'alcool tétrahydrofurfurylique, le diacétone-alcool, et les tensioactifs anioniques et/ou non-ioniques.

**6.** Solutions de colorants conformes à la revendication 5, caractérisées en ce qu'elles contiennent, comme tensioactif anionique ou non-ionique, un acide perfluoroalkylsulfonique en $C_4$-$C_{12}$, un acétylène-glycol symétrique comportant de 8 à 20 atomes de carbone dans le squelette carboné, et/ou un tensioactif de silicone, à base d'un copolymère d'alkylsiloxane et d'oxyde d'alkylène.

**7.** Solutions de colorants conformes à la revendication 1, caractérisées en ce qu'elles contiennent de 10 à 40 % en poids d'un colorant anionique, en particulier d'un complexe métallique de colorant, ou d'un mélange de colorants de ce type ;
de 40 à 80 % en poids d'un éther mono(alkylique en $C_1$-$C_4$) du propylèneglycol ou du butylèneglycol, d'un ester de l'un de ces éthers et d'un acide carboxylique en $C_1$-$C_4$, ou d'un mélange de tels composés ;
et éventuellement, un ou plusieurs des composants suivants :
de 2 à 30 % en poids d'un ou plusieurs glycols en $C_2$-$C_4$ ;
de 2 à 9 % en poids d'alcool tétrahydrofurfurylique ou de diacétone-alcool ;
de 0,1 à 2 % en poids de tensioactif(s) anionique et/ou non-ionique ;
jusqu'à 40 % en poids d'eau.

**8.** Procédé de fabrication de solutions de colorants conformes à la revendication 1, caractérisé en ce que l'on dissout le colorant anionique ou le mélange de colorants anioniques dans un éther mono(alkylique en $C_1$-$C_4$) de propylèneglycol ou de butylèneglycol, dans un ester d'un tel éther et d'un acide carboxylique en $C_1$-$C_4$,ou dans un mélange de tels solvants, à une température de 10 à 70 °C, l'on débarrasse la solution, si nécessaire, des parties insolubles qu'elle contient, à la température ambiante, on y ajoute éventuellement un ou plusieurs composés choisis parmi les glycols en $C_1$-$C_4$, l'alcool tétrahydrofurfurylique, le diacétone-alcool et les tensioactifs anioniques et/ou non-ioniques, et on ajuste le pouvoir tinctorial de la solution à la valeur souhaitée grâce à une addition supplémentaire d'éther monoalkylique de propylèneglycol ou de butylèneglycol, d'ester de ces éthers et/ou d'eau.

**9.** Utilisation des solutions de colorants conformes à la revendication 1 pour la fabrication de solutions à pulvériser, destinées à la teinture de matériaux textiles, du cuir, du bois ou du papier, et en particulier, pour la fabrication de solutions destinées à la teinture du cuir par pulvérisage.